# EUROPEAN PATENT SPECIFICATION

(11) **EP 1 211 395 B1**
(45) Date of publication and mention of the grant of the patent: **04.10.2006**
(21) Application number: 01943882.9
(22) Date of filing: 29.06.2001
(51) Int. Cl.: F01N 3/08, B01D 53/94, B01J 23/40

(54) **CATALYST DEVICE FOR CLARIFICATION OF EXHAUST GAS**
KATALYTISCHE VORRICHTUNG ZUR ABGASREINIGUNG
DISPOSITIF CATALYTIQUE PERMETTANT LA CLARIFICATION DE GAZ D'ECHAPPEMENT

(30) Priority: 30.06.2000 JP 2000198389; 28.02.2001 JP 2001054376
(43) Date of publication of application: 05.06.2002
(73) Proprietor: ICT Co., Ltd., Osaka-shi, Osaka 541-0043 (JP); MITSUBISHI JIDOSHA KOGYO KABUSHIKI KAISHA, Tokyo 108-8410 (JP); International Catalyst Technology, Inc., Ridgefield Park, N.Y. 07660 (US)
(72) Inventor: NAKAJIMA, Hiroyuki, Minato-ku, Tokyo 108-8410 (JP); SUZAWA, Takumi, Minato-ku, Tokyo 108-8410 (JP); SETO, Hirokuni, Minato-ku, Tokyo 108-8410 (JP); TASHIRO, Keisuke, Minato-ku, Tokyo 108-8410 (JP); NAKAYAMA, Osamu, Minato-ku, Tokyo 108-8410 (JP); TANIGUCHI, Shigeyoshi, Aboshi-ku, Himeji-shi, Hyogo 671-1241 (JP); GOTOH, Hideki, Aboshi-ku, Himeji-shi, Hyogo 671-1241 (JP)
(74) Representative: Modiano, Micaela Nadia
(86) International application number: PCT/JP2001/005661
(87) International publication number: WO 2002/002916

(56) References cited:
- EP-A- 0 915 244
- JP-A- 5 293 384
- JP-A- 9 173 782
- JP-A- 58 146 441
- US-A- 5 376 610
- US-A- 5 783 160

## Description

### BACKGROUND OF THE INVENTION

The present invention relates to a catalytic apparatus for exhaust purification for use in an internal-combustion engine operable with a theoretical air-fuel ratio and a lean air-fuel ratio, and more particularly, to a catalytic apparatus for exhaust purification provided with a three-way catalyst.

In general, three-way catalysts for exhaust gas purification are configured to enjoy high exhaust purifying performance when an engine is operated with a theoretical air-fuel ratio. They include a single-layer coat type in which one catalyst layer is formed on a carrier and a multi-layer type in which a plurality of catalyst layers are formed to improve the heat resistance of a noble metal.

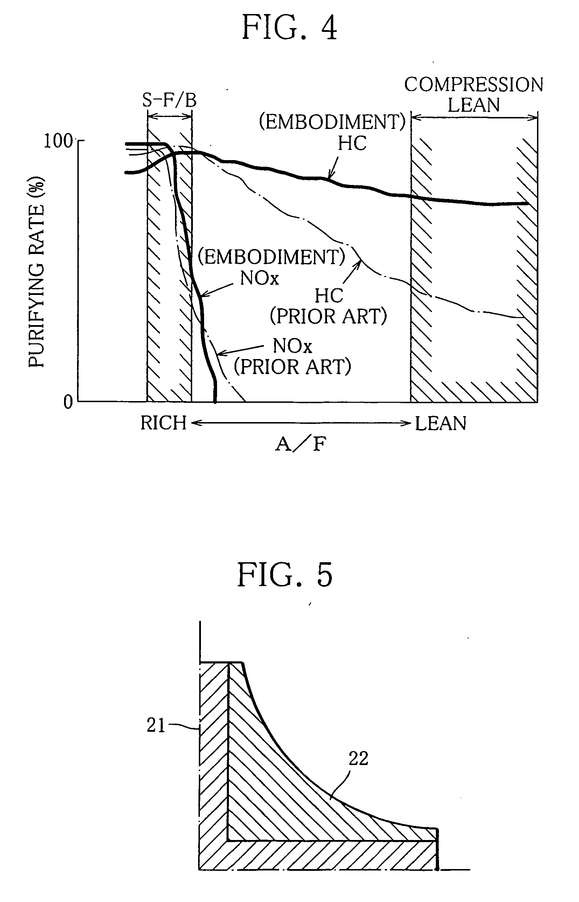

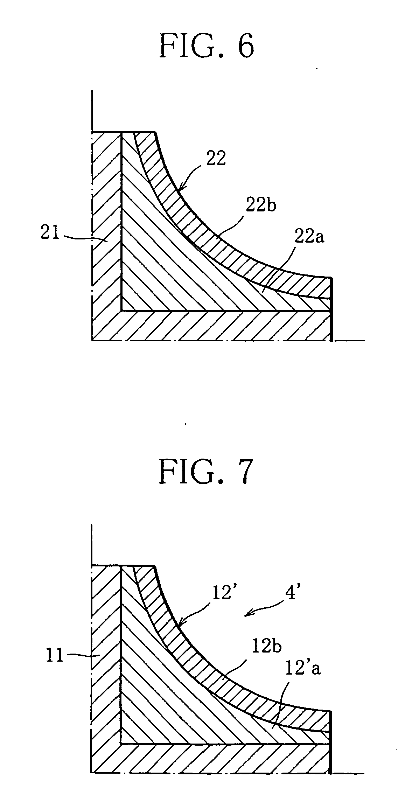

FIG. 5 shows an example of a single-layer three-way catalyst. A catalyst layer 22 that is formed on a carrier 21 of the three-way catalyst contains platinum (Pt) and rhodium (Rh) or contains palladium (Pd) and rhodium. On the other hand, a catalyst layer 22 of a three-way catalyst of the double-layer coat type illustrated by way of example in FIG. 6 is composed of an inner layer 22a that contains platinum and a surface layer 22b that contains platinum and rhodium. The inner layer 22a of the catalyst layer 22 sometimes may be loaded with palladium in place of platinum. In this case, the surface layer 22b is loaded with rhodium in place of the combination of platinum and rhodium.

Three-way catalysts are also widely used in lean-burn engines that are operated with a lean air-fuel ratio. An exhaust purification apparatus described in Jpn. Pat. Appln. KOKAI Publication No. 11-193713, for example, comprises a lean NOx catalyst that serves to purify NOx (nitrogen oxide) in exhaust gas when the engine is operated with the lean air-fuel ratio and a three-way catalyst that is disposed as a light-off catalyst on the upper-stream side of the NOx catalyst. The three-way catalyst serves to reduce HC (hydrocarbon) in exhaust gas that is discharged at the cold start of the engine.

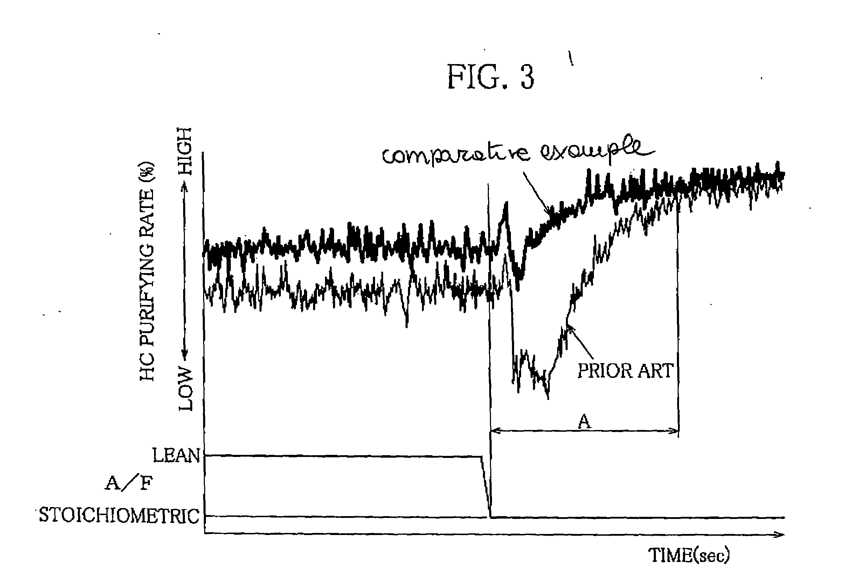

However, the three-way catalyst has a problem that satisfactory HC purifying performance cannot be obtained during the engine operation with the lean air-fuel ratio or immediately after the air-fuel ratio is changed. This point will now be described with reference to FIGS. 3 and 4.

FIG. 3 shows change of the HC purifying rate with time observed when the exhaust air-fuel ratio is changed from lean over to stoichiometric. FIG. 4 shows the relations between exhaust air-fuel ratio and HC purifying rate and between exhaust air-fuel ratio and NOx purifying rate. In FIG. 4, terms "S-FB" and "compression lean" represent engine operation areas for the theoretical and lean air-fuel ratios, respectively. A thin full line in FIG. 3 and a thin dashed line in FIG. 4 represent the results of tests on the three-way catalyst of the double-layer coat type shown in FIG. 6.

As seen from FIG. 4, the HC purifying rate of the three-way catalyst of FIG. 6 lowers in a lean area. As seen from FIG. 3, moreover, the HC purifying rate of the three-way catalyst of FIG. 6 suddenly lowers immediately after the exhaust air-fuel ratio is changed from lean over to stoichiometric, that is, during the first half of a period A of FIG. 3.

The HC purifying rate in the lean area is supposed to lower for the following reasons.

First, rhodium is liable to get poisoned by oxygen in an oxygen concentration increasing atmosphere and be deactivated. This is believed to make it hard to obtain a satisfactory HC purifying rate in the lean area. Further, rhodium has a characteristic such that it can be activated at a relatively low temperature. Therefore, the exhaust gas purifying performance at the cold start can be improved by using the three-way catalysts of FIGS. 5 and 6, having the catalyst layer 22 and its surface layer 22b loaded with rhodium, as a pre-stage catalyst, as is described in Jpn. Pat. Appln. KOKAI Publication No. 11-193713.

Secondly, it is supposed that if rhodium exists in the catalyst layer, other noble metals in the catalyst layer are alloyed with rhodium, so that their catalytic effect lowers. For example, the catalyst layer 22 of FIG. 5 and the surface layer 22b of FIG. 6 are loaded with platinum or palladium that cannot get poisoned by oxygen even in the lean area. Therefore, the catalytic effect of platinum or palladium is expected to purify HC in the exhaust gas. Actually, however, satisfactory HC purification cannot be achieved by means of the three-way catalyst of FIG. 6, as shown in FIG. 4. A possible reason for this is that platinum or palladium is alloyed with rhodium in the surface layer of the catalyst layer so that the reactive sites are reduced and the catalytic effect and the HC purifying effect of the three-way catalyst are lowered.

The HC purifying rate immediately after the change of the air-fuel ratio is supposed suddenly to lower for the following reasons. The HC purifying effect in the lean area is produced mainly by platinum or palladium that is activated in the oxygen concentration increasing atmosphere, while the HC purifying effect in a rich area is produced mainly by rhodium that is activated in an oxygen concentration lowering atmosphere. If the exhaust air-fuel ratio changes from the lean side over to the rich side, therefore, HC purification with platinum or palladium is replaced with HC purification with rhodium. Since rhodium is liable to get poisoned by oxygen and be deactivated, as mentioned before, it is still deactivated and cannot produce its catalytic effect immediately after the change of the air-fuel ratio. This is supposed to cause the sudden reduction of the HC purifying rate immediately after the change of the air-fuel ratio.

This sudden reduction of the HC purifying rate may be noticeable in exhaust purification apparatuses that use a three-way catalyst as a light-off catalyst. The exhaust purification apparatuses of this type include an apparatus in which an additive such as ceria (CeO₂) having the O₂ storage function is added to the light-off catalyst in order to improve the exhaust characteristic in a rich operation. In this apparatus, oxygen that is discharged from ceria during the rich operation is used to purify HC and CO in the exhaust gas. In the exhaust purification apparatus described in Jpn. Pat. Appln. KOKAI Publication No. 11-193713, on the other hand, the ceria loading of the light-off catalyst is restricted so that CO that is used to reactivate the lean NOx catalyst cannot be consumed by the light-off catalyst. If the O₂ storage function of the light-off catalyst is thus low, the quantity of oxygen released from the light-off catalyst during the transition from lean to rich is so small that required oxygen for HC purification is in short supply when the HC purification with rhodium is started. Thus, the temporary sudden reduction in the HC purifying rate becomes noticeable.

The low HC purifying rate of the three-way catalyst can be improved by increasing the noble metal loading of the catalyst. In the case of the three-way catalyst of FIG. 5 that contains palladium and rhodium, for example, the HC purifying rate can be improved by considerably increasing the palladium content. In order to obtain a satisfactory HC purifying rate, however, the catalyst must be loaded with a very large quantity of expensive palladium. In consideration of manufacturing cost, therefore, this method cannot be a practical countermeasure.

### DISCLOSURE OF THE INVENTION

The object of the present invention is to provide a catalytic apparatus for exhaust purification, capable of restraining a rise in manufacturing cost and securing satisfactory HC purifying performance even in a lean area.

In order to achieve the above object, according to the present invention, there is provided a catalytic apparatus for exhaust purification that is provided in an exhaust path of an internal-combustion engine operable with at least a theoretical air-fuel ratio and a lean air-fuel ratio, comprising a three-way catalyst having an inner layer thereof mainly containing an admixture of both rhodium and platinum as a noble metal and a surface layer thereof mainly containing platinum as a noble metal, and exhaust purification means.

The three-way catalyst of the present invention has a layer structure, which is proper to this invention, formed of an inner layer loaded with an admixture of rhodium and platinium and a surface layer mainly loaded with platinum, whereby platinum is restrained from being alloyed with rhodium. Even if the platinum loading is equal to that of the conventional three-way catalyst, therefore, good HC purifying performance can be enjoyed in the lean area. Thus, according to the present invention, there is provided a low-priced catalytic apparatus for exhaust purification with a three-way catalyst that has satisfactory HC purifying performance in the lean area.

More specifically, platinum added to the surface layer of the three-way catalyst is a noble metal that is activated in an oxygen concentration increasing atmosphere, and such platinum is restrained from being alloyed with rhodium that is added to the inner layer. During lean operation, therefore, platinum in the surface layer is activated satisfactorily to produce its catalytic effect, whereupon HC in the exhaust gas can be satisfactorily purified by means of the catalytic effect.

When the engine operation area is changed from the lean area over to a stoichiometric (theoretical air-fuel ratio) area or rich area so that the exhaust air-fuel ratio is changed from lean over to stoichiometric or rich, rhodium is activated to produce the HC purifying effect. Since rhodium, a noble metal that easily gets poisoned by oxygen in the oxygen concentration increasing atmosphere, is added to the inner layer, the degree of deactivation of rhodium by oxygen poisoning during lean operation is lowered. Accordingly, rhodium is quickly activated, so that HC purification is promptly started under the catalytic effect of rhodium.

To be exact, the start of HC purification with rhodium lags behind the change of the exhaust air-fuel ratio. Possibly, therefore, required oxygen for HC purification may be in short supply during the transition from HC purification with platinum to HC purification with rhodium. However, the three-way catalyst of the present invention can make up for the shortage of oxygen. This is because platinum added to the surface layer has a relatively high O₂ storage function, considering that it belongs to a noble metal, and can adsorb oxygen in the oxygen concentration increasing atmosphere and release oxygen when the atmosphere is changed over to the oxygen concentration lowering atmosphere. Even if the three-way catalyst is loaded with a limited quantity of or no ceria or any other additive that has the O₂ storage function, therefore, oxygen cannot be in substantial short supply when the exhaust air-fuel ratio is changed.

According to the three-way catalyst having the layer structure proper to the present invention, as described above, HC purification with rhodium can be quickly started when the exhaust air-fuel ratio is changed from lean over to rich, and the release of oxygen from platinum can make up for the shortage of oxygen. Thus, the HC purifying rate can be prevented from suddenly lowering immediately after the change of the exhaust air-fuel ratio. According to the invention the surface layer is loaded mainly with platinum, then the noble metal content should be set within the range from 0.05 to 20.0 g/l of catalyst volume, and preferably from 1.5 to 3.0 g/l thereof.

According to the invention, the exhaust path is provided with exhaust purification means adapted to absorb NOx when the air-fuel ratio of incoming exhaust gas is a lean air-fuel ratio and to release or reduce the absorbed NOx when the oxygen concentration of the incoming exhaust gas lowers, and the three-way catalyst is located on the upper-stream side of the exhaust purification means.

According to this mode, NOx and HC in the exhaust gas can be effectively purified by means of the exhaust purification means and the three-way catalyst, respectively, so that the overall exhaust gas purifying performance can be further improved.

According to the invention, the three-way catalyst is loaded with a very small quantity of or no ceria that is aimed principally at an O₂ storage function.

According to this mode, the possibility that the oxygen concentration is prevented from lowering by the presence of oxygen released from ceria can be eliminated or restrained, when the oxygen concentration is to be lowered in order to release or reduce NOx absorbed by means of the exhaust purification means. As mentioned before, platinum have their respective O₂ storage functions. Since their O₂ storage functions are lower than that of ceria, however, the release or reduction of NOx cannot be hindered by oxygen that is released from platinum as the oxygen concentration of the exhaust gas lowers.

According to the invention, the noble metal in the inner layer of the three-way catalyst mainly consists both rhodium and platinum.

In the case where the inner layer of the three-way catalyst is loaded mixedly with rhodium and platinum, moreover, platinum in the surface layer of the catalyst produces a satisfactory HC purifying effect during lean operation. Besides, the HC purifying performance of the three-way catalyst for the stoichiometric or rich exhaust air-fuel ratio can be improved without ruining the HC purifying effect during lean operation. As described in detail later, an experiment conducted by the inventor hereof revealed this fact. If the HC purifying performance for the stoichiometric and rich operations is improved, the HC purifying performance during the transition of the exhaust air-fuel ratio from lean to stoichiometric or rich is improved.

According to the invention the noble metal in the surface layer of the three-way catalyst mainly consists of platinum. According to this mode, the lean-mode HC purifying performance is improved.

### BRIEF DESCRIPTION OF THE DRAWINGS

FIG. 1 is a general view showing a catalytic apparatus for exhaust purification according to the comparative example ;
FIG. 2 is an enlarged fragmentary sectional view showing one quarter portion of a cell that constitutes a pre-stage catalyst;
FIG. 3 is a diagram showing change of the HC purifying rate with time observed when the exhaust air-fuel ratio is changed from lean over to stoichiometric;
FIG. 4 is a diagram showing the relations between exhaust air-fuel ratio and HC purifying rate and between exhaust air-fuel ratio and NOx purifying rate;
FIG. 5 is an enlarged fragmentary sectional view showing one quarter portion of a cell that constitutes a typical three-way catalyst of a single-layer coat type;
FIG. 6 is a partially enlarged sectional view showing one quarter portion of a cell that constitutes a typical three-way catalyst of a double-layer coat type;
FIG. 7 is an enlarged fragmentary sectional view showing one quarter portion of a cell that constitutes a pre-stage catalyst of a catalytic apparatus for exhaust purification according to the invention;
FIG. 8 is a diagram showing HC purifying rates for lean and stoichiometric air-fuel ratio areas of the catalytic apparatus of the invention, compared with those of the apparatus of the comparative example; and
FIG. 9 is a diagram showing changes of the HC purifying rate of the catalytic apparatus of the invention with time observed when the exhaust air-fuel ratio is changed from lean over to stoichiometric, compared with those of the comparative example and a prior art example.

### BEST MODE FOR CARRYING OUT THE INVENTION

The following is a description of a catalytic apparatus for exhaust purification according to a comparative example that does not belong to the present invention. The comparative example is only intended to better illustrate the present invention.

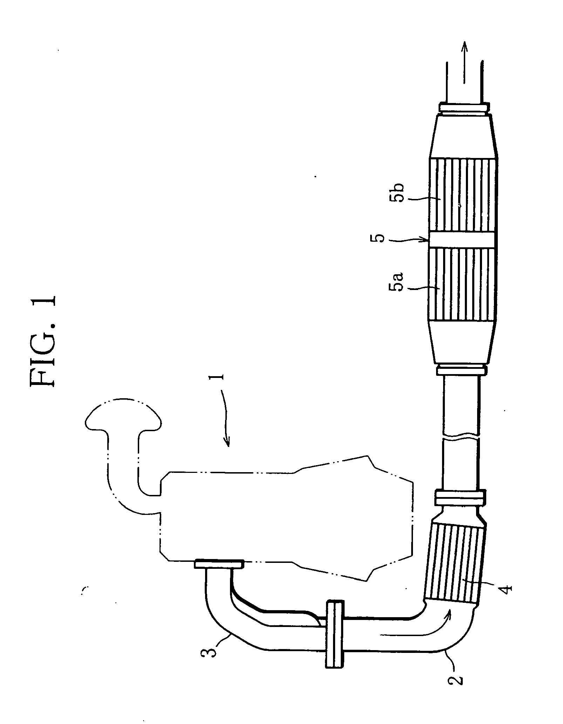

Referring to FIG. 1, the catalytic apparatus for exhaust purification of the comparative example is provided in an exhaust path 2 of an engine 1. An outline of the engine 1 will be described first. The engine 1, which is constructed as a cylinder-injection gasoline engine in which fuel is injected directly into a combustion chamber, can carry out fuel injection in a compression stroke as well as in a suction stroke. In suction-stroke injection (e.g., S-F/B mode in which a feedback control is carried out to attain the stoichiometric air-fuel ratio), the air-fuel ratio of an air-fuel mixture is controlled for the stoichiometric or rich side, and the air-fuel mixture is uniformly distributed and burned in a cylinder. In a compression-stroke injection (compression lean mode), an ignitable air-fuel mixture near the stoichiometric level is formed around an ignition plug and the overall air-fuel ratio of the air-fuel mixture in the cylinder is controlled for the lean side, whereby stratified combustion is carried out.

The exhaust path (exhaust pipe) 2 is connected to an exhaust port of the engine 1 by means of an exhaust manifold 3. A pre-stage catalyst 4 formed of a three-way catalyst is provided in that position in the exhaust path 2 which is relatively close to the engine 1. An underfloor catalyst 5 is located on the lower-stream side of the pre-stage catalyst 4 in the exhaust path 2. The underfloor catalyst 5 is formed of an NOx-occlusive catalyst 5a on the upper-stream side and a three-way catalyst 5b on the lower-stream side. In the comparative example the catalytic apparatus for exhaust purification is composed of the pre-stage catalyst 4 and the underfloor catalyst 5.

The NOx-occlusive catalyst 5a and the three-way catalyst 5b of the underfloor catalyst 5 have an ordinary configuration. For example, the NOx-occlusive catalyst 5a bears a base, such as alumina (Al₂O₃), silica (SiO₂), silica-alumina (SiO₂ Al₂O₃), titania (Ti₂), zirconia (ZrO₂), or zeolite; a catalyst assistant, such as ceria (CeO₂), lanthana (La₂O₃), yttria (Y₂O₃), neodymia (Nd₂O₃), praseodymium oxide (Pr₆O₁₁), ferric oxide (Fe₂O₃), manganese dioxide (MnO₂), nickel oxide (NiO), zinc oxide (ZnO), or magnesia (MgO); an NOx-occlusive agent, such as sodium (Na), potassium (K), rubidium (Rb), cesium (Cs), calcium (Ca), strontium (Sr), or barium (Ba); and an active metal, such as platinum (Pt), palladium (Pd), rhodium (Rh), or iridium (Ir). The NOx-occlusive catalyst 5a serves to absorb NOx in an oxygen concentration increasing atmosphere and to reduce NOx to N₂ (nitrogen) and the like after temporarily releasing it in an oxygen concentration lowering atmosphere that mainly contains CO.

The three-way catalyst 5b serves to purify HC, CO, and NOx in exhaust gas in the aforesaid S-F/B mode, and is constructed basically in the same manner as a three-way catalyst shown in FIG. 5 or 6, for example. Further, its O₂ storage function is enhanced by loading a catalyst layer with ceria (CeO₂). The three-way catalyst 5b may be omitted if three-way performance is given to the Nox-occlusive catalyst 5a.

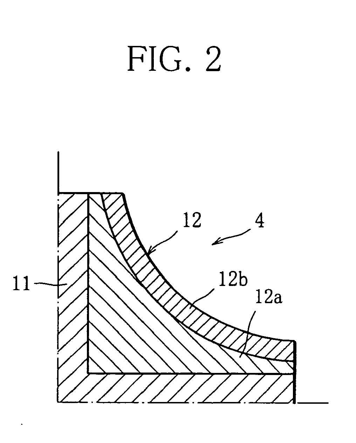

FIG. 2 shows a quarter portion of one cell that is formed in the pre-stage catalyst 4. As shown in FIG. 2, a cell of a cordierite carrier 11 has a square shape. The cordierite carrier 11 is obtained by mixing, for example, alumina-based powder, silica-based powder, and magnesia-based powder so that the ratios between alumina, silica, and magnesia ensure cordierite composition, dispersing the resulting mixture in water, molding its solids into a honeycomb configuration, and calcining the honeycomb compact.

A catalyst layer 12 on the cordierite carrier 11 is composed of a double-layer coat. In the comparative example, a noble metal in an inner layer 12a of the catalyst layer 12 mainly consists of rhodium, while a noble metal in a surface layer 12b of the catalyst layer 12 mainly consists of platinum. The rhodium content of the inner layer 12a should be adjusted to a value within the range from 0.05 to 5.0 g/l of catalyst volume, and preferably from 0.3 to 0.6 g/l thereof. The platinum content of the surface layer 12b should be adjusted to a value within the range from 0.05 to 20.0 g/l of catalyst volume, and preferably from 1.5 to 3.0 g/l thereof.

The catalyst layer 12 is loaded with a refractory inorganic oxide of 5 to 50 g/l of catalyst volume, preferably 30 to 300 g/l thereof, for example.

As is evident from this description, ceria is added to neither the inner layer 12a nor the surface layer 12b of the catalyst layer 12, and the pre-stage catalyst 4 is not provided with the high O₂ storage function that ceria has. However, addition of ceria cannot be prohibited unless it has an O₂ storage function such that it prevents NOx purge of the NOx-occlusive catalyst 5a or it oxidizes CO that is supplied as a reducing agent during NOx purge, thereby preventing CO supply to the NOx-occlusive catalyst 5a. Therefore, very small quantities of ceria may be added to the inner layer 12a or the surface layer 12b. For example, CeO₂ of 10 g/l or less of catalyst volume is added.

The catalyst layer 12 is formed in the following manner, for example. First, a slurry that contains a noble metal mainly consisting of rhodium is prepared, and the cordierite carrier 11 is immersed in the slurry. When the carrier is calcined after it is dried, the inner layer 12a that mainly consists of rhodium is formed on the surface of the cordierite carrier 11. Then, a slurry that contains a noble metal mainly consisting of platinum is prepared, and the cordierite carrier 11 is immersed in the slurry. When the carrier is calcined after it is dried, the surface layer 12b that mainly consists of platinum is formed on the surface of the inner layer 12a.

The inner layer 12a of the comparative example may be formed of rhodium alone or rhodium loaded with a small quantity of platinum in order to further improve high stoichiometric HC purifying characteristic of rhodium observed in stoichiometric operation. In the present invention, which will be mentioned later, the inner layer 12a is loaded with a large quantity of platinum along with rhodium. Platinum is carried at a distance of 150 *µ*m or less, preferably 100 *µ*m or less, from the surface of the surface layer 12b at the corner portions of the honeycomb cell. As mentioned before, if platinum, and rhodium are caused mixedly to exist in the surface layer of the catalyst layer, the reactive sites of platinum are reduced to lower the HC purifying performance as platinum is alloyed with rhodium. In this case where the surface layer 12b composed of platinum, therefore, it is advisable to avoid addition of rhodium to the surface layer 12b in order to prevent the reduction in reactive sites and bring out the proper HC purifying performance to the maximum. Preferably, platinum should be singly carried on the surface layer 12b, for example.

Rhodium is liable to be activated when it is exposed to an oxygen concentration lowering atmosphere in stoichiometric operation, in particular, and to get poisoned by oxygen in the oxygen concentration lowering atmosphere in lean operation. On the other hand, platinum is liable to be activated in the oxygen concentration increasing atmosphere in lean operation, in particular. In the catalyst 4 of the comparative example, as mentioned before, the inner layer 12a and the surface layer 12b of the catalyst layer 12 contain rhodium and platinum, respectively.

In lean operation based on compression-stroke injection, therefore, platinum that constitutes the surface layer 12b is activated to perform the HC purifying function effectively.

In order to evaluate the HC purifying performance of the exhaust purification apparatus that is provided with the pre-stage catalyst (three-way catalyst) 4 and the underfloor catalyst 5 constructed in the above manner, the apparatus was mounted on an engine, and HC purifying efficiencies were measured with the exhaust air-fuel ratio adjusted to the lean air-fuel ratio of 30 and the stoichiometric air-fuel ratio of 14.6, and the NOx purifying efficiency for the stoichiometric air-fuel ratio was measured. Also measured was the behavior of the HC purifying efficiency observed when the exhaust air-fuel ratio was changed from the lean air-fuel ratio over to the stoichiometric air-fuel ratio. The same measurements were made for an exhaust purification apparatus that is provided with the conventional three-way catalyst of the double-layer coat shown in FIG. 6, in place of the pre-stage catalyst 4. FIGS. 3 and 4 show the results of the measurements.

FIG. 3 shows the way the HC purifying rate changes when the exhaust air-fuel ratio is changed from lean over to stoichiometric. FIG. 4 shows the relation between exhaust air-fuel ratio and HC purifying rate and the relation between exhaust air-fuel ratio and NOx purifying rate. In FIGS. 3 and 4, thick lines represent results of tests on the exhaust purification apparatus according to the comparative example, while thin dashed lines and a thin full line represent results of tests on the exhaust purification apparatus that is furnished with the three-way catalyst of FIG. 6. According to the exhaust purification apparatus of the comparative example, as seen from FIGS. 3 and 4, a high enough HC purifying rate can be obtained even for the lean area. According to the exhaust purification apparatus of the comparative example, moreover, the HC purifying rate can be restrained from lowering immediately after the exhaust air-fuel ratio is changed. The following is a description of this point.

If the exhaust air-fuel ratio is changed from lean over to stoichiometric, rhodium is activated to perform the HC purifying function in the oxygen concentration lowering atmosphere. Since the start of HC purification with rhodium lags the change of the exhaust air-fuel ratio, oxygen for HC purification may be temporarily in short supply during the transition from HC purification with platinum to HC purification with rhodium, in some cases.

As is known, noble metals have some O₂ storage function in general. Among these metals, platinum has a relatively high O₂ storage function. The surface layer 12b of the catalyst layer of the pre-stage catalyst 4 of the comparative example contains platinum having such O₂ storage function. Sufficient oxygen is adsorbed by platinum in the surface layer 12b in lean operation. As the operation mode is changed over to the rich operation, oxygen is released to make up for the aforesaid temporary shortage of oxygen. Thus, HC is purified by the released oxygen, so that the HC purifying rate gently changes without undergoing a temporary sudden reduction, as shown in FIG. 3. Since desactivation of rhodium in the inner layer 12a that is attributable to oxygen poisoning in a lean atmosphere is reduced, the sudden reduction of the purifying rate can be also prevented by quickly starting HC purification as the operation mode is changed over to rich operation.

The O₂ storage function of a noble metal such as platinum is, so to speak, a subordinate function. Although this function is high enough for the oxygen supply during the aforesaid transition, it is much lower than the O₂ storage function of ceria. This tendency is advantageous to the NOx purge of the NOx-occlusive catalyst 5a. Since the quantity of oxygen that is adsorbed by platinum cannot ensure continuous oxidation of a relatively large quantity of CO that is supplied to discharge and reduce NOx, there is hardly any possibility of the O₂ storage function of platinum hindering the NOx purge process.

The pre-stage catalyst 4 of the comparative example has a layer structure formed of the inner layer 12a that contains rhodium and the surface layer 12b that contains platinum, whereby the HC purifying performance can be secured, and platinum and rhodium in the surface layer can be restrained from being alloyed with each other. Since the platinum content itself is hardly different from those of the prior art examples shown in FIGS. 5 and 6, the manufacturing cost is not very different from those of the prior art examples

According to the comparative example, as described above, a rise in manufacturing cost can be prevented, and the addition of ceria is restricted or omitted so that satisfactory HC purifying performance can be secured in the lean area and during the transition of exhaust air-fuel-ratio.

The following is a description of a catalytic apparatus for exhaust purification according to the present invention.

The catalytic apparatus of the invention differs from the apparatus of the comparative example, in which the only rhodium is added as a noble metal to the inner layer 12a of the three-way catalyst, in that both rhodium and platinum are added to an inner layer. For other respects, the present invention and the comparative example have no differences.

In brief, the catalytic apparatus of the invention, like the catalytic apparatus shown in FIG. 1, comprises a three-way catalyst, which is located close to an engine in its exhaust path and formed as a pre-stage catalyst, and an underfloor catalyst (corresponding to the underfloor catalyst 5 shown in FIG. 1) located on the lower-stream side of the pre-stage catalyst in the exhaust path. As mentioned before, only the configuration of the inner layer of the three-way catalyst (pre-stage catalyst) is different from that of the pre-stage catalyst 4 of FIG. 1. In FIG. 7, therefore, the three-way catalyst of the catalytic apparatus of the present invention is denoted by reference numeral 4', and illustration of other components than the three-way catalyst is omitted.

As shown in FIG. 7, the three-way catalyst 4' is formed of a catalyst layer 12' carried on a cordierite carrier 11. The catalyst layer 12' is formed of an inner layer 12'a that contains noble metals mainly consisting of both rhodium and platinum and a surface layer 12b that contains a noble metal mainly consisting of platinum. The cordierite carrier 11 and the surface layer 12b are constructed substantially in the same manner as those of the pre-stage catalyst 4 shown in FIG. 2. Preferably, the platinum content of the surface layer 12b should be adjusted to 0.5 to 10 g/l of the volume of the three-way catalyst 4'.

If the platinum content of the surface layer 12b of the catalyst layer 12' is in a suitable range from 0.5 to 10 g/l, the total noble metal content or total rhodium and platinum content of the inner layer 12'a preferably ranges from 0.5 to 10 g/l. Preferably, the metal content ratio or the ratio (Rh:Pt) of the rhodium content to the platinum content should be 1:1 to 1:10. Thus, the inner layer 12'a of the present invention is characterized by its platinum content that is increased without failing to restrain the total noble metal content. Therefore, the HC purifying performance in stoichiometric and rich operations can be made higher than in the case of the comparative example, without lowering the lean-mode HC purifying performance, as mentioned later.

The catalyst layer 12' is formed substantially in the same manner as the catalyst layer 12 shown in FIG. 2. More specifically, a slurry is prepared that mainly consists of rhodium and platinum having quantities thereof determined such that the noble metal content ratio is adjusted to the aforesaid suitable values. Then, the cordierite carrier 11 is immersed in the slurry, dried, and calcined to form the inner layer 12'a that mainly contains rhodium and platinum on the surface of the cordierite carrier 11. Next, a slurry is prepared that contains a noble metal mainly consisting of platinum, and the cordierite carrier 11 formed with the inner layer 12'a is immersed in this slurry, dried, and calcined to form the surface layer 12b on the surface of the inner layer 12'a.

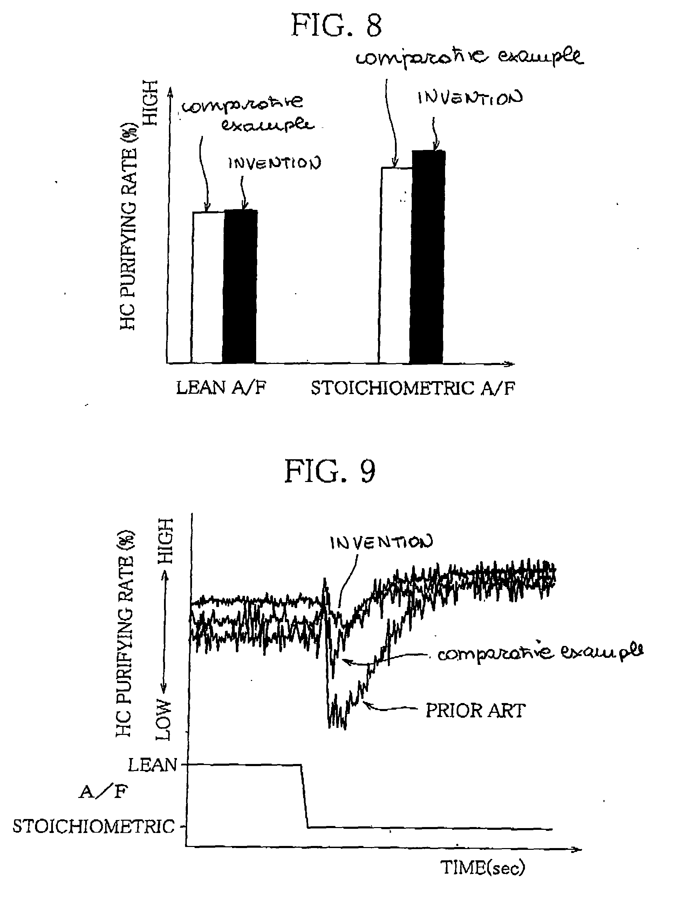

In order to evaluate the HC purifying performance of the exhaust purification apparatus that is provided with three-way catalyst 4' and the underfloor catalyst 5 constructed in the above manner, the apparatus was mounted on an engine, and HC purifying efficiencies were measured with the exhaust air-fuel ratio adjusted to the lean air-fuel ratio of 30 and the stoichiometric air-fuel ratio of 14.6. Also measured was the behavior of the HC purifying efficiency observed when the exhaust air-fuel ratio was changed from the lean air-fuel ratio over to the stoichiometric air-fuel ratio. FIGS. 8 and 9 show the results of the measurements.

Black rectangles shown in the left- and righthand half portions of FIG. 8 individually represent measured values of the HC purifying efficiency for the lean and stoichiometric air-fuel ratios of the exhaust purification apparatus according to the present invention. In FIG. 8, white rectangles individually represent similar measured values for the exhaust purification apparatus of the comparative example.

As seen from FIG. 8, the HC purifying efficiency of the exhaust purification apparatus of the present invention for the lean air-fuel ratio is equal to or a little higher than that of the comparative example, and its HC purifying efficiency for the stoichiometric air-fuel ratio is higher than that of the comparative example

FIG. 9 shows measured waveforms of HC purifying efficiencies for the respective air-fuel ratio transitions of the catalytic apparatuses for exhaust purification according to the comparative example, the invention and the conventional apparatus. As seen from FIG. 9, the catalytic apparatus of the present invention is higher in transitional HC purifying efficiency than the apparatus of the comparative example as well as the prior art examples.

The measurement results shown in FIGS. 8 and 9 indicate that the HC purifying performance for the lean operation of the catalytic apparatus of the present invention is equal to or higher than that of the apparatus of the comparative example, and that its HC purifying performances for the stoichiometric operation and air-fuel ratio transition are higher than those of the apparatus of the comparative example. Further, the measurement results indicate that the performance improvement is achieved by the arrangement where rhodium and platinum are mixed in the inner layer 12'a of the three-way catalyst 4'.

Since the respective HC purifying functions of rhodium and platinum that constitute the inner layer 12'a and the surface layer 12b, respectively, of the three-way catalyst 4' are basically the same as in the comparative example, a description of those functions is omitted.

The catalytic apparatus of the present invention may be modified in the same manner as the apparatus of the comparative example. For example, palladium may be used in place of platinum as a component material of the surface layer 12b.

Although the preferred embodiments of the present invention have been described herein, the invention is not limited to these embodiments and their modifications. According to the foregoing embodiments, for example, the catalytic apparatus for exhaust purification is provided in the exhaust path 2 of the cylinder-injection gasoline engine 1. However, the engine is not limited to this type, and the catalytic apparatus for exhaust purification may be attached to a lean-burn engine of a suction-pipe type adapted to inject fuel into an ordinary suction pipe, for example.

Although the honeycomb-type cordierite carrier 11 is used as a carrier according to each of the foregoing embodiments, moreover, the present invention is also applicable to a catalytic apparatus for exhaust purification provided with a carrier that is formed of any other material than cordierite. The same effect may be also obtained with use of a metallic carrier, for example. In the case where the honeycomb-type cordierite carrier is used, moreover, the cell of the cordierite carrier is not limited to the square shape, and may alternatively be triangular or hexagonal.

According to the foregoing embodiments, furthermore, the three-way catalyst is formed of the three-way catalyst 4' that is located close to the engine 1. However, the location of the three-way catalyst is not limited to this position. In the case where the underfloor catalyst 5 is formed in a manner such that the NOx-occlusive catalyst 5a and the three-way catalyst 5b are positioned reversely, for example, the three-way catalyst 5b may be constructed in the same manner as the pre-stage catalyst 4'.

According to the foregoing embodiments, on the other hand, the three-way catalyst is used in combination with the NOx-occlusive catalyst 5a. Alternatively, however, the present invention may be applied to a catalytic apparatus for exhaust purification that uses no NOx-occlusive catalyst.

According to the present invention, moreover, the three-way catalyst is loaded with no or a limited quantity of ceria.

## Claims

1. A catalytic apparatus for exhaust purification that is provided in an exhaust path of an internal-combustion engine operable with at least a theoretical air-fuel ratio and a lean air-fuel ratio, comprising:
exhaust purification means provided in the exhaust path and adapted to absorb NOx when an air-fuel ratio of incoming exhaust gas is a lean air-fuel ratio and to release or reduce the absorbed NOx when an oxygen concentration of the incoming exhaust gas lowers; and
a three-way catalyst provided in the exhaust path and located on an upper-stream side of said exhaust purification means, **characterized in that**
said three-way catalyst has an inner layer thereof mainly containing an admixture of both rhodium and platinum, as noble metals and a surface layer thereof mainly containing platinum as a noble metal, and said three-way catalyst is loaded with a very small quantity of or no ceria.

2. A catalytic apparatus for exhaust purification according to claim 1, **characterized in that** a platinum content of said surface layer is set within a range from 0.05 to 20.0 g/l of catalyst volume.

3. A catalytic apparatus for exhaust purification according to claim 1, **characterized in that** a platinum content of said surface layer is set within a range from 0.5 to 10.0 g/l of catalyst volume.

4. A catalytic apparatus for exhaust purification according to claim 1, **characterized in that** a ratio of a rhodium content to a platinum content in said inner layer is set within a range from 1:1 to 1:10.

## Patentansprüche

1. Eine katalytische Vorrichtung zur Abgasreinigung, die in einem Abgasweg einer Verbrennungskraftmaschine bereitgestellt wird, die mit mindestens einem theoretischen Luft-Kraftstoff-Verhältnis und einem mageren Luft-Kraftstoff-Verhältnis betrieben werden kann, die folgendes umfasst:
Abgasreinigungsmittel, die in dem Abgasweg bereitgestellt werden und angepasst sind, NOx zu absorbieren, wenn ein Luft-Kraftstoff-Verhältnis des ankommenden Abgases ein mageres Luft-Kraftstoff-Verhältnis ist, und das absorbierte NOx freizusetzen oder zu reduzieren, wenn die Sauerstoffkonzentration des ankommenden Abgases sinkt; und
einen Drei-Wege-Katalysator, der in dem Abgasweg bereitgestellt wird und sich auf der stromaufwärtigen Seite des Abgasreinigungsmittels befindet, **dadurch gekennzeichnet, dass**
der Drei-Wege-Katalysator eine Innenschicht davon hat, die hauptsächlich eine Mischung von sowohl Rhodium als auch Platin als Edelmetalle enthält, und eine Oberflächenschicht davon, die hauptsächlich Platin als Edelmetall enthält, und wobei der Drei-Wege-Katalysator mit einer sehr kleinen Menge oder mit keinem Ceriumdioxid beladen ist.

2. Eine katalytische Vorrichtung zur Abgasreinigung gemäß Anspruch 1, **dadurch gekennzeichnet, dass** ein Platingehalt der Oberflächenschicht innerhalb eines Bereichs von 0,05 bis 20,0 g/l Katalysatorvolumen eingestellt ist.

3. Eine katalytische Vorrichtung zur Abgasreinigung gemäß Anspruch 1, **dadurch gekennzeichnet, dass** ein Platingehalt der Oberflächenschicht innerhalb eines Bereichs von 0,5 bis 10,0 g/l Katalysatorvolumen eingestellt ist.

4. Eine katalytische Vorrichtung zur Abgasreinigung gemäß Anspruch 1, **dadurch gekennzeichnet, dass** ein Verhältnis eines Rhodiumgehalts zu einem Platingehalt in der Innenschicht innerhalb eines Bereichs von 1:1 bis 1:10 eingestellt ist.

## Revendications

1. Dispositif catalytique pour la purification des gaz d'échappement qui est prévu dans un trajet d'échappement d'un moteur à combustion interne pouvant fonctionner avec au moins un rapport air/carburant théorique et un rapport air/carburant pauvre, comprenant :
des moyens de purification des gaz d'échappement prévus dans le trajet d'échappement et adaptés pour absorber les NOx lorsqu'un rapport air/carburant des gaz d'échappement entrants est un rapport air/carburant pauvre et pour libérer ou réduire les NOx absorbés lorsqu'une concentration en oxygène des gaz d'échappement entrants diminue ; et
un catalyseur trois voies prévu dans le trajet d'échappement et situé sur un côté en amont desdits moyens de purification des gaz d'échappement, **caractérisé en ce que**
ledit catalyseur trois voies a une couche intérieure contenant principalement un mélange de rhodium et de platine comme métaux nobles et une couche de surface contenant principalement du platine comme métal noble, et ledit catalyseur trois voies est chargé avec une très petite quantité de, voire sans, oxyde de cérium.

2. Dispositif catalytique permettant la purification des gaz d'échappement selon la revendication 1, **caractérisé en ce qu'**une teneur en platine de ladite couche de surface est dans une plage de 0,05 à 20,0 g/l du volume du catalyseur.

3. Dispositif catalytique permettant la purification des gaz d'échappement selon la revendication 1, **caractérisé en ce qu'**une teneur en platine de ladite couche de surface est dans une plage de 0,5 à 10,0 g/l du volume du catalyseur.

4. Dispositif catalytique permettant la purification des gaz d'échappement selon la revendication 1, **caractérisé en ce qu'**un rapport d'une teneur en rhodium sur une teneur en platine dans ladite couche intérieure est fixé dans une plage de 1 : 1 à 1 : 10.
